# EUROPÄISCHE PATENTSCHRIFT

(11) **EP 1 236 202 B1**
(45) Veröffentlichungstag und Bekanntmachung des Hinweises auf die Patenterteilung: **22.09.2004**
(21) Anmeldenummer: 00987033.8
(22) Anmeldetag: 27.10.2000
(51) Int. Cl.: G11B 20/10

(54) **VERFAHREN ZUR WIEDERGABE VON AUF EINEM SPEICHERMEDIUM GESPEICHERTEN DATEN**
METHOD FOR REPRODUCING DATA WHICH IS STORED ON A STORAGE MEDIUM TEN
PROCEDE DE REPRODUCTION DE DONNEES MEMORISEES SUR UN SUPPORT D'INFORMATIONS

(30) Priorität: 30.10.1999 DE 19952362
(43) Veröffentlichungstag der Anmeldung: 04.09.2002
(73) Patentinhaber: ROBERT BOSCH GMBH, 70442 Stuttgart (DE)
(72) Erfinder: BECKER, Volker, 31139 Hildesheim (DE); ZIMMERMANN, Holger, 31141 Hildesheim (DE); BAAS, Dieter, 77694 Auenheim (DE)
(86) Internationale Anmeldenummer: PCT/DE2000/003789
(87) Internationale Veröffentlichungsnummer: WO 2001/033567

(56) Entgegenhaltungen:
- EP-A- 0 777 106
- EP-A- 0 926 644
- WO-A-98/26417
- DE-A- 19 700 643
- DE-A- 19 919 032
- JP-A- 3 150 765
- JP-A- 5 334 805
- JP-A- 59 180 853
- US-A- 5 199 019
- US-A- 5 766 018

## Beschreibung

### Stand der Technik

Die Erfindung geht von einem Verfahren zur Wiedergabe von auf einem Speichermedium gespeicherten Daten nach der Gattung des Hauptanspruchs aus.

Aus dem Blaupunktkatalog "Sound und Fahrvergnügen pur. Mobile Kommunikation von Blaupunkt. Programm '96/'97" ist beispielsweise der Kompakt-Disc-Wechsler CDC-F05 bekannt, bei dem auf einer Kompakt-Disc gespeicherte digitale Audiodaten in einem Abspielgerät wiedergegeben werden können.

Aus US-A- 5 766 018 ist ein Wiedergabegerät mit Plattenwechseleinrichtung für die Wiedergabe von Audio- oder Videoinformation von optischen Platten bekannt. Bei der Auswahl einer neuen Platte entsteht normalerweise eine Verzögerung bis zur Wiedergabe, da die entsprechende Platte erst aus dem Magazin in die Abspielposition gebracht werden muß. Um diese Verzögerung zu vermeiden, wird in US-A- 5 766 018 vorgeschlagen, jeweils beim Einlegen einer neuen Platte in das Gerät einen Teil der Daten auszulesen und in einem Speicher des Gerätes abzulegen. Wenn die Platte später zur Wiedergabe ausgewählt wird, kann diese Information unmittelbar aus dem Speicher wiedergegeben werden, um die Zeit zu überbrücken, die benötigt wird, um die Platte in die Abspielposition zu bringen. Bei dem bekannten Gerät erfolgt das Speichern der Information im Gerät jedoch in einem separaten Schritt vor der ersten Wiedergabe der Information.

### Vorteile der Erfindung

Das erfindungsgemäße Verfahren mit den Merkmalen des Hauptanspruchs hat demgegenüber den Vorteil, daß in einem ersten Betriebsmodus Daten während eines Abspielvorgangs des Speichermediums in einem vorzugsweise nichtflüchtigen Speicher abgelegt werden, daß in einem zweiten Betriebsmodus das Speichermedium insbesondere für einen Abspiel- und Wiedergabevorgang ausgewählt wird und daß innerhalb eines Zeitraums, in dem das ausgewählte Speichermedium von einem Vorratsspeicher in eine Abspielposition, in der die auf dem Speichermedium gespeicherten Daten von einer Lesevorrichtung auslesbar sind, oder in eine Ausschubposition, von der das ausgewählte Speichermedium aus dem Abspielgerät oder dem Vorratsspeicher entnehmbar ist, gebracht wird, zumindest ein

Teil der im Speicher abgelegten Daten abgespielt und wiedergegeben wird. Auf diese Weise kann die Wartezeit bis zum vollständigen Laden des ausgewählten Speichermediums in die Abspielposition oder Ausschubposition entfallen und ein Benutzer anhand der während des Ladevorgangs wiedergegebenen Daten entscheiden, ob er nicht ein anderes Speichermedium zum Abspielen und zur Wiedergabe bzw. zum Ausschub auswählen möchte. Der Bedienvorgang für die Auswahl eines Speichermediums aus dem Vorratsspeicher wird somit für den Benutzer beschleunigt. Für den Fall von im nichtflüchtigen Speicher gespeicherten Audiodaten des ausgewählten Speichermediums ist es auch nicht erforderlich, beispielsweise den Namen des ausgewählten Speichermediums in einer Anzeigevorrichtung darzustellen. Vielmehr kann der Benutzer allein anhand der Wiedergabe der Audiodaten entscheiden, ob er ein anderes Speichermedium auswählen möchte. Dies ist besonders vorteilhaft bei einer Anwendung des erfindungsgemäßen Verfahrens in einem Fahrzeug, da der Benutzer zur Auswahl des Speichermediums den Blick nicht vom Straßenverkehr wenden muß und somit in seiner Konzentration nicht beeinträchtigt wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die mindestens eine Datengruppe zur Speicherung im ersten Betriebsmodus mittels einer Bedieneinheit an einem beliebigen Speicherort auf dem Speichermedium ausgewählt wird. Auf diese Weise kann der Benutzer selbst entscheiden, welche Stelle bei der Auswahl des Speichermediums im zweiten Betriebsmodus für seine Entscheidungsfindung abgespielt werden soll. Die Speicherung der entsprechenden Datengruppen im Speicher ist somit optimal an die Bedürfnisse des Benutzers angepaßt.

Ein weiterer Vorteil besteht darin, daß die mindestens eine Datengruppe zur Speicherung im ersten Betriebsmodus an einem vorgegebenen Speicherort auf dem Speichermedium ausgewählt wird. Auf diese Weise wird der Bedienvorgang zur Speicherung der Datengruppen im ersten Betriebsmodus automatisiert, so daß der Bedienaufwand für den Benutzer erheblich reduziert wird. Auch dies ist vor allem bei Anwendung des erfindungsgemäßen Verfahrens in einem Fahrzeug von Vorteil, wobei die Aufmerksamkeit des Benutzers nur unwesentlich vom Straßenverkehr abgelenkt wird.

Besonders vorteilhaft ist es, daß der Speicherort in Abhängigkeit der Häufigkeit der Wiedergabe von zuvor abgespielten Datengruppen des Speichermediums vorgegeben wird, so daß die mindestens eine Datengruppe des vorgegebenen Speicherortes die größte Wiedergabehäufigkeit aufweist oder zu einem Speicherabschnitt des Speichermediums mit der größten Wiedergabehäufigkeit gehört. Auf diese Weise wird auch bei dem automatisierten Speichern von Datengruppen im ersten Betriebsmodus eine möglichst optimale Anpassung an die Bedürfnisse des Benutzers erzielt, indem für den am häufigsten wiedergegebenen Speicherabschnitt des Speichermediums repräsentative Datengruppen im ersten Betriebsmodus im Speicher abgelegt werden. Somit ist auch sichergestellt, daß bei Wiedergabe dieser Datengruppen im zweiten Betriebsmodus der Benutzer anhand dieser Datengruppen das ausgewählte Speichermedium auch möglichst sicher erkennt.

Ein weiterer Vorteil besteht darin, daß die Anzahl der in dem ersten Betriebsmodus im Speicher abgelegten Datengruppen so gewählt wird, daß spätestens nach einmaligem Abspielen aller im Speicher abgelegten Datengruppen des Speichermediums dieses im zweiten Betriebsmodus ausgewählte Speichermedium vom Vorratsspeicher in die Abspielposition oder in die Ausschubposition gebracht wurde. Auf diese Weise wird verhindert, daß der Ladevorgang des Speichermediums vom Vorratsspeicher in die Abspielposition oder Ausschubposition vom Benutzer wahrgenommen wird, da während des ganzen Ladevorgangs sichergestellt ist, daß Datengruppen des Speichermediums aus dem Speicher wiedergegeben werden. Somit wird der Bedienkomfort für den Benutzer erhöht.

Besonders vorteilhaft ist es, daß das Speichermedium im zweiten Betriebsmodus nach Erreichen der Abspielposition beginnend an einem Speicherort ausgelesen und wiedergegeben wird, der demjenigen Speicherort unmittelbar folgt, dessen Daten vor Erreichen der Abspielposition durch das Speichermedium zuletzt aus dem Speicher ausgelesen und wiedergegeben wurden. Auf diese Weise kann der durch Auslesen des Speichers im zweiten Betriebsmodus begonnene Abspielvorgang nach Erreichen der Abspielposition durch das Speichermedium übergangslos und ununterbrochen fortgesetzt werden, so daß der Ladevorgang des Speichermediums vom Vorratsspeicher in die Abspielposition für den Benutzer völlig unbemerkt bleibt. Der Bedienkomfort und der Hörgenuß, im Falle der Abspeicherung von Audiodaten des Speichermediums, wird somit beim Ladevorgang des Speichermediums vom Vorratsspeicher in die Abspielposition wesentlich erhöht.

Ein weiterer Vorteil besteht darin, daß die Daten komprimiert und/oder mit reduzierter Abtastrate und/oder mit reduzierter Datenbreite im Speicher abgelegt werden. Auf diese Weise kann Speicherplatz eingespart und der Speicheraufwand entsprechend vermindert werden.

Ein weiterer Vorteil besteht darin, daß im ersten Betriebsmodus eine Startzeit und/oder eine Spieldauer für die im Speicher abzulegenden Daten in Abhängigkeit ihres Speicherortes auf dem Speichermedium ermittelt werden und daß die Startzeit und/oder die Spieldauer in Zuordnung zu Identifikationsdaten des Speichermediums gespeichert werden. Eine Speicherung der Startzeit und/oder der Spieldauer erfordert weniger Speicherplatz als die Speicherung der Datengruppen des Speichermediums, wobei die im Speicher abzulegenden Datengruppen durch die Startzeit und die Spieldauer eindeutig identifiziert sind. Somit können beispielsweise bei Entnahme des Speichermediums aus dem Abspielgerät bzw. aus dem Vorratsspeicher die Datengruppen aus dem Speicher gelöscht werden, um Speicherplatz einzusparen, wobei die Startzeit und/oder die Spieldauer für diese Datengruppen weiterhin im Speicher verbleiben, um bei einem späteren Wiedereinführen des Speichermediums in das Abspielgerät bzw. in den Vorratsspeicher die entsprechenden Datengruppen zu identifizieren und bei Gelegenheit im ersten Betriebsmodus wieder im Speicher abzulegen. Somit lassen sich langfristig auch für eine möglichst große Anzahl von Speichermedien, die die Anzahl der Speicherplätze im Vorratsspeicher bei weitem überschreiten kann, zumindest Informationen zur Identifizierung der bei Bedarf im Speicher abzulegenden Datengruppen speichern.

### Zeichnung

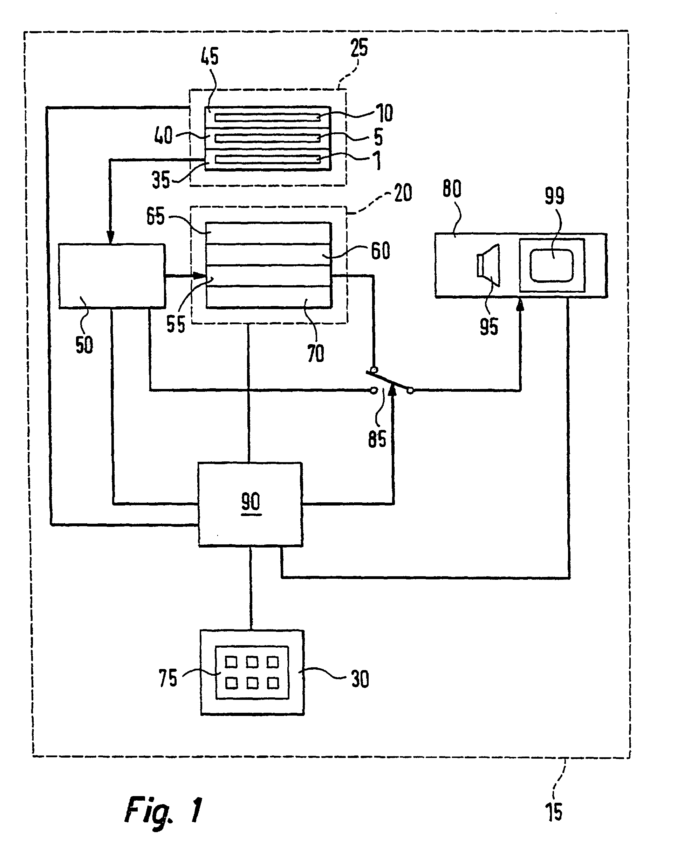

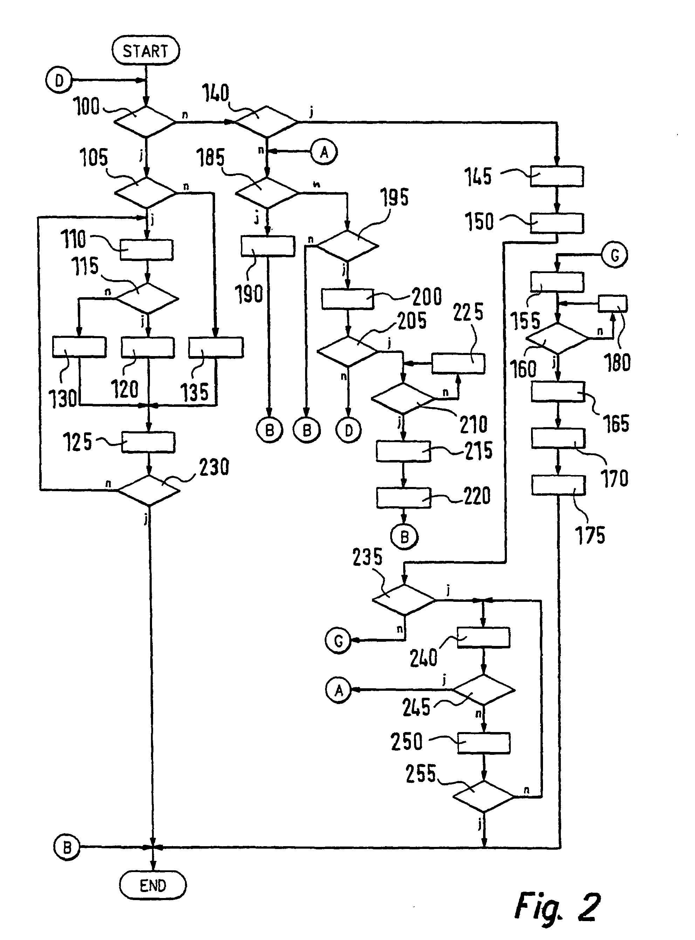

Ein Ausführungsbeispiel der Erfindung ist in der Zeichnung dargestellt und in der nachfolgenden Beschreibung näher erläutert. Es zeigen Figur 1 ein Blockschaltbilds eines Abspielgerätes und Figur 2 einen Ablaufplan für die Funktionsweise einer Steuerung des Abspielgerätes.

### Beschreibung des Ausführungsbeispiels

In Figur 1 kennzeichnet 15 ein Abspielgerät, das beispielsweise als Kompakt-Disc-Wechsler ausgebildet sein kann. Das Abspielgerät 15 umfaßt einen Vorratsspeicher 25 mit einem ersten Vorratsspeicherplatz 35, einem zweiten vorratsspeicherplatz 40 und einem dritten Vorratsspeicherplatz 45. Gemäß dem Ausführungsbeispiel nach Figur 1 ist im ersten Vorratsspeicherplatz 35 ein erstes Speichermedium 1, im zweiten Vorratsspeicherplatz 40 ein zweites Speichermedium 5 und im dritten Vorratsspeicherplatz 45 ein drittes Speichermedium 10 abgelegt. Bei den Speichermedien 1, 5, 10 kann es sich beispielsweise um optische Speicherplatten in Form von Kompakt-Discs, CD-ROM's, um Digital-Video-Discs oder dergleichen handeln. Bei den Speichermedien 1, 5, 10 kann es sich jedoch auch um magnetische Speichermedien, beispielsweise in Form von magnetischen Speicherplatten handeln. Auf den Speichermedien 1, 5, 10 können digitale Audio- und/oder Videodaten und/oder sonstige Daten gespeichert sein. Im Falle der Ausbildung der Speichermedien 1, 5, 10 als Kompakt-Discs werden auf den Speichermedien 1, 5, 10 digitale Audiodaten gespeichert sein. Im Falle der Ausbildung der Speichermedien 1, 5, 10 als Digital-Video-Discs werden auf den Speichermedien 1, 5, 10 digitale Videodaten gespeichert sein. Es ist jedoch auch möglich, Speichermedien 1, 5, 10 mit beispielsweise in magnetischer Form gespeicherten Audio- und/oder Videodaten und/oder sonstige Daten für die Speicherung im Vorratsspeicher 25 vorzusehen.

Es können jedoch auch Speichermedien 1, 5, 10 mit gespeicherten analogen Audio- und/oder Videodaten und/oder sonstigen Daten vorgesehen sein.

Einer der Vorratsspeicherplätze 35, 40, 45 ist mit einer Abspieleinheit 50 des Abspielgerätes 15 verbunden, im Ausführungsbeispiel gemäß Figur 1 ist der erste Vorratsspeicherplatz 35 mit der Abspieleinheit 50 verbunden. Dasjenige Speichermedium 1, 5, 10, dessen zugehöriger Vorratsspeicherplatz 35, 40, 45 gerade mit der Abspieleinheit 50 verbunden ist, kann in die Abspieleinheit 50 zum Auslesen durch eine in der Abspieleinheit 50 vorgesehene und in Figur 1 nicht dargestellte Lesevorrichtung geladen und auch von der Abspieleinheit 50 wieder in den zugehörigen Vorratsspeicherplatz 35, 40, 45 zurücktransportiert werden. Die Verbindung der Abspieleinheit 50 mit einem der Vorratsspeicherplätze 35, 40, 45 kann durch eine Tastatur 75 einer Bedieneinheit 30 über eine Steuerung 90 beeinflußt werden. Die Abspieleinheit 50 und die Bedieneinheit 30 sind somit an die Steuerung 90 angeschlossen. Dabei kann die Abspieleinheit 50 zusammen mit dem Vorratsspeicher 25 auch außerhalb des Abspielgerätes 15, beispielsweise in Form eines Kompakt-Disc-Wechslers vorgesehen sein, wobei die Steuerung 90 und die Bedieneinheit 30 beispielsweise in einem mit dem Kompakt-Disc-Wechsler verbundenen Autoradio als Steuer- und Bedienzentrale angeordnet sein können. Die Abspieleinheit 50 ist außerdem mit einem Speicher 20 verbunden und über einen von der Steuerung 90 steuerbaren Schalter 85 mit einer Wiedergabeeinheit 80 verbindbar. Die Wiedergabeeinheit 80 ist ebenfalls wie auch der Speicher 20 an die Steuerung 90 angeschlossen. Die Wiedergabeeinheit 80 kann dabei einen oder mehrere Lautsprecher 95 zur akustischen Wiedergabe von gegebenenfalls digital/analog gewandelten Audiodaten und/oder eine Anzeigevorrichtung 99 zur Wiedergabe von gegebenenfalls digital/analog gewandelten Videodaten und/oder sonstigen Daten umfassen. Auch der Speicher 20 ist über den Schalter 85 mit der Wiedergabeeinheit 80 verbindbar. Bei Auswahl des ersten Speichermediums 1 und entsprechender Verbindung des ersten Vorratsspeicherplatzes 35 mit der Abspieleinheit 50 greift gemäß Figur 1 die Abspieleinheit 50 in einem ersten Betriebsmodus auf einen ersten Speicherplatz 55 des Speichers 20 zu, der in einem zweiten Betriebsmodus über den Schalter 85 mit der Wiedergabeeinheit 80 verbindbar ist. Entsprechend ist im Speicher 20 dem zweiten Vorratsspeicherplatz 40 ein zweiter Speicherplatz 60 und dem dritten Vorratsspeicherplatz 45 ein dritter Speicherplatz 65 zugeordnet. Der Speicher 20 umfaßt weiterhin einen Speicherbereich 70 zur Speicherung von spezifischen Informationen über die im Vorratsspeicher 25 abgelegten Speichermedien 1, 5, 10 und gegebenenfalls weitere, nicht im Vorratsspeicher 25 bzw. in der Abspieleinheit 50 abgelegte Speichermedien.

Im ersten Betriebsmodus werden Daten in Form mindestens einer Datengruppe von einem in der Abspieleinheit 50 abgelegten Speichermedium 1, 5, 10 in dem entsprechend zugeordneten Speicherplatz 55, 60, 65 des Speichers 20 abgelegt. Gemäß Figur 1 ist der erste Vorratsspeicherplatz 35 mit der Abspieleinheit 50 verbunden, so daß das erste Speichermedium 1 im ersten Betriebsmodus vom ersten Vorratsspeicherplatz 35 in die Abspieleinheit 50 transportiert wurde und in der Abspieleinheit 50 in eine Abspielposition gebracht wurde, in der die auf dem ersten Speichermedium 1 gespeicherten Daten von der Lesevorrichtung auslesbar sind. Entsprechendes gilt bei Verbindung des zweiten Vorratsspeicherplatzes 40 mit der Abspieleinheit 50 für das zweite Speichermedium 5 bzw. bei Verbindung des dritten Vorratsspeicherplatzes 45 mit der Abspieleinheit 50 für das dritte Speichermedium 10. Das Ausführungsbeispiel soll im folgenden jedoch weiterhin mittels des ersten Speichermediums 1 beschrieben werden.

Der erste Betriebsmodus kann entweder von einem Benutzer an der Tastatur 75 eingestellt oder von der Steuerung 90 automatisch beispielsweise in einer Betriebspause des Abspielgerätes 15 eingestellt werden. Nach Einstellen des ersten Betriebsmodus können eines oder mehrere der Speichermedien 1, 5, 10 durch Auswahl des Benutzers an der Tastatur 75 einzeln in die Abspieleinheit 50 geladen werden oder es können ,durch die Steuerung 90 veranlaßt, automatisch alle Speichermedien 1, 5, 10 nacheinander jeweils einzeln in die Abspieleinheit 50 geladen werden. Das Verfahren wird nun für den ersten Betriebsmodus anhand des in die Abspieleinheit 50 geladenen ersten Speichermediums 1 beschrieben.

Nachdem das erste Speichermedium 1 in der Abspieleinheit 50 in die Abspielposition gebracht worden ist, werden Daten des ersten Speichermediums 1 von der Lesevorrichtung ausgelesen und im ersten Speicherplatz 55 abgelegt. Der Speicher 20 mit seinen Speicherplätzen 55, 60, 65 ist dabei als nichtflüchtiger Speicher ausgebildet. Bei den im ersten Speicherplatz 55 abgelegten Daten kann es sich um mindestens eine während des Abspielens des ersten Speichermediums 1 ausgewählte Datengruppe handeln, die dann im ersten Speicherplatz 55 abgelegt wird. Für die Auswahl der mindestens einen Datengruppe sind dabei zwei Möglichkeiten vorgesehen, wobei auch nur jeweils eine der beiden Möglichkeiten vorgesehen sein kann.

Eine erste Möglichkeit besteht darin, daß die mindestens eine Datengruppe mittels der Tastatur 75 der Bedieneinheit 30 an einem beliebigen Speicherort auf dem ersten Speichermedium 1 vom Benutzer ausgewählt wird. Diese Möglichkeit kann auch als manuelle Selektion bezeichnet werden. Das erste Speichermedium 1 wird dabei in der Abspieleinheit 50 abgespielt. Wird eine vom Benutzer als besonders charakteristisch empfundene Stelle des ersten Speichermediums 1 abgespielt, so kann er dies der Steuerung 90 während des Abspielens dieser Stelle durch entsprechende Betätigung der Tastatur 75 mitteilen, worauf die Steuerung 90 die Speicherung der an dem gewählten Speicherort befindlichen Daten im ersten Speicherplatz 55 veranlaßt. Befindet sich dabei die ausgewählte mindestens eine Datengruppe mitten in einem Speicherabschnitt, beispielsweise einem Musiktitel des ersten Speichermediums 1, so kann die Steuerung 90 auch veranlassen, mindestens eine Datengruppe am Anfang dieses Speicherabschnitts, beispielsweise den Anfang des Musiktitels, im ersten Speicherplatz 55 zu speichern.

Die zweite Möglichkeit stellt eine automatische Selektion dar. Dabei wird die im ersten Speicherplatz 55. abzuspeichernde mindestens eine Datengruppe des ersten Speichermediums 1 an einem vorgegebenen Speicherort auf dem ersten Speichermedium 1 ausgewählt. Bei dieser Vorgabe kann es sich beispielsweise um einen Speicherort am Anfang des ersten Speicherabschnitts des ersten Speichermediums 1, beispielsweise um den Anfang des ersten Musiktitels bei einer Kompakt-Disc handeln. Dann wird mindestens eine Datengruppe von einem solchermaßen vorgegebenen Speicherort ausgelesen und im ersten Speicherplatz 55 abgelegt. Diese Vorgabe des Speicherortes eignet sich besonders für Speichermedien, die neu in das Abspielgerät 15 bzw. in den Vorratsspeicher 25 eingeführt wurden und von der Abspieleinheit 50 noch nie abgespielt wurden.

Handelt es sich jedoch bei dem ersten Speichermedium 1 um ein Speichermedium, das bereits zuvor von der Abspieleinheit 50 abgespielt wurde, so kann der Speicherort auch in Abhängigkeit der Häufigkeit der Wiedergabe von zuvor abgespielten Datengruppen des ersten Speichermediums 1 vorgegeben werden, so daß die mindestens eine Datengruppe des vorgegebenen Speicherortes die größte Wiedergabehäufigkeit aufweist oder zu einem Speicherabschnitt des ersten Speichermediums 1 mit der größten Wiedergabehäufigkeit gehört. Die Wiedergabehäufigkeiten der Datengruppen oder der Speicherabschnitte der einzelnen Speichermedien 1, 5, 10 bzw. die zu deren Ermittlung erforderlichen Wiedergabezeitpunkte können dabei im Speicherbereich 70 in Zuordnung zum zugehörigen Speichermedium 1, 5, 10 abgespeichert sein. Länger zurückliegende Wiedergabezeitpunkte können für die Ermittlung der Wiedergabehäufigkeiten geringer bewertet werden. Es kann mindestens eine der am häufigsten wiedergegebenen Datengruppen im ersten Speicherplatz 55 für das erste Speichermedium 1 abgespeichert werden oder es wird dort mindestens eine Datengruppe vom Beginn des am häufigsten wiedergegebenen Speicherabschnitts des ersten Speichermediums 1, beispielsweise der Titelanfang des am häufigsten wiedergegebenen Musiktitels einer Kompakt-Disc abgelegt.

Zur Einsparung von Speicherplatz können die Daten im Speicher 20 komprimiert und/oder mit reduzierter Abtastrate und/oder mit reduzierter Datenbreite abgelegt werden.

Es kann auch vorgesehen sein, im ersten Betriebsmodus eine Startzeit und/oder eine Spieldauer für die im Speicher 20 abzulegenden Daten der Speichermedien 1, 5, 10 in Abhängigkeit ihres Speicherortes auf dem entsprechenden Speichermedium 1, 5, 10 zu ermitteln. Mittels der Startzeit läßt sich dabei eindeutig der Speicherort für die erste im Speicher 20 abzulegende Datengruppe des entsprechenden Speichermediums 1, 5, 10 identifizieren. Mittels der Spieldauer läßt sich eindeutig die Anzahl der der ersten im Speicher 20 abzulegenden Datengruppe folgenden im Speicher 20 abzulegenden Datengruppen identifizieren. Die Ermittlung der Spieldauer ist dabei jedoch nur erforderlich, wenn mehr als eine Datengruppe im Speicher 20 für das entsprechende Speichermedium 1, 5, 10 abgelegt werden soll. Die Startzeit und/oder die Spieldauer können in Zuordnung zum entsprechenden Speichermedium 1, 5, 10 im Speicherbereich 70 gespeichert werden. Diese Zuordnung zum entsprechenden Speichermedium 1, 5, 10 kann mittels der Identifikationsdaten erfolgen, die für jedes Speichermedium 1, 5, 10 im Speicherbereich 70 abgelegt sind und charakteristische Daten des entsprechenden Speichermediums 1, 5, 10, wie beispielsweise Gesamtspielzeit und Anzahl von Speicherabschnitten, beispielsweise von Musiktiteln auf einer Kompakt-Disc, umfassen.

Im zweiten Betriebsmodus wählt der Benutzer mittels der Tastatur 75 eines der Speichermedien 1, 5, 10 zum Abspielen und zur Wiedergabe aus. Gemäß Figur 1 wählt der Benutzer dabei beispielhaft das erste Speichermedium 1 im ersten Vorratsspeicherplatz 35 aus. Für den Fall, daß das erste Speichermedium 1 bereits in der Abspieleinheit 50 vorliegt, wird der zweite Betriebsmodus wieder ausgeschaltet und das erste Speichermedium 1 kann sogleich von der Lesevorrichtung der Abspieleinheit 50 ausgelesen und somit abgespielt werden, so daß die von der Lesevorrichtung ausgelesenen Daten des ersten Speichermediums 1 mittels der Wiedergabeeinheit 80 wiedergegeben werden können. In diesem Fall veranlaßt die Steuerung 90 den Schalter 85 zur Verbindung der Abspieleinheit 50 mit der Wiedergabeeinheit 80, damit die wiederzugebenden Daten von der Abspieleinheit 50 auch an die Wiedergabeeinheit 80 übertragen werden können.

Befindet sich jedoch das erste Speichermedium 1 noch im Vorratsspeicher 25, so bleibt der zweite Betriebsmodus aktiviert, und es wird innerhalb eines Zeitraums, in dem das ausgewählte erste Speichermedium 1 vom ersten Vorratsspeicherplatz 35 in die Abspielposition in der Abspieleinheit 50 gebracht wird, zumindest ein Teil der im ersten Speicherplatz 55 abgelegten Daten abgespielt und mittels der Wiedergabeeinheit 80 wiedergegeben. Dazu veranlaßt die Steuerung 90 den Schalter 85 zur Verbindung des ersten Speicherplatzes 55 mit der Wiedergabeeinheit 80, damit die aus dem ersten Speicherplatz 55 wiederzugebenden Daten an der Wiedergabeeinheit 80 wiedergegeben werden können. Für den Fall, daß die Daten komprimiert und/oder mit reduzierter Abtastrate und/oder mit reduzierter Datenbreite im Speicher 20 abgelegt wurden, ist vor der Wiedergabe der Daten an der Wiedergabeeinheit 80 eine entsprechende Dekomprimierung oder Wiederaufbereitung der Daten erforderlich, damit diese ohne akustische und/oder visuelle Beeinträchtigung von der Wiedergabeeinheit 80 wiedergegeben werden können.

Es kann vorgesehen sein, daß die Anzahl der in dem ersten Betriebsmodus im jeweiligen Speicherplatz 55, 60, 65 des Speichers 20 abgelegten Datengruppen so gewählt wurde, daß spätestens nach einmaligem Abspielen aller im jeweiligen Speicherplatz 55, 60, 65 des Speichers 20 abgelegten Datengruppen des zugehörigen Speichermediums 1, 5, 10 dieses im zweiten Betriebsmodus ausgewählte Speichermedium 1, 5, 10 vom Vorratsspeicher 25 in die Abspielposition der Abspieleinheit 50 gebracht wurde. Gemäß dem anhand von Figur 1 beschriebenen Ausführungsbeispiel wurde im zweiten Betriebsmodus das erste Speichermedium 1 zum Abspielen und zur Wiedergabe ausgewählt. Dabei wurden im ersten Betriebsmodus mindestens so viele Datengruppen des ersten Speichermediums 1 im ersten Speicherplatz 55 abgelegt, daß spätestens nach einmaligem Abspielen aller im ersten Speicherplatz 55 abgelegten Datengruppen des ersten Speichermediums 1 das erste Speichermedium 1 im zweiten Betriebsmodus vom ersten Vorratsspeicherplatz 35 in die Abspielposition der Abspieleinheit 50 gebracht wurde. Der Ladevorgang des ersten Speichermediums 1 in die Abspieleinheit 50 wird somit vom Benutzer nicht wahrgenommen.

Es kann weiterhin vorgesehen sein, daß das gemäß Figur 1 beispielhaft beschriebene erste Speichermedium 1 im zweiten Betriebsmodus nach Erreichen der Abspielposition in der Abspieleinheit 50 beginnend an einem Speicherort ausgelesen und wiedergegeben wird, der demjenigen Speicherort unmittelbar folgt, dessen Daten vor Erreichen der Abspielposition durch das erste Speichermedium 1 zuletzt aus dem ersten Speicherplatz 55 ausgelesen und wiedergegeben wurden. Dabei kann die Lesevorrichtung der Abspieleinheit 50 mittels der für das erste Speichermedium 1 im Speicherbereich 70 gespeicherten Startzeit zuzüglich der für den Ladevorgang für den Transport des ersten Speichermediums 1 aus dem ersten Vorratsspeicherplatz 35 in die Abspielposition in der Abspieleinheit 50 erforderlichen Zeit auf den sich durch diese Zeitsumme ergebenden Speicherort des ersten Speichermediums 1 fokusieren, vorausgesetzt die für den Transport ermittelte Zeit ist mit der Abspielzeit für die im ersten Speicherplatz 55 abgelegten Datengruppen synchronisiert. Nach Auslesen der Datengruppen aus dem ersten Speicherplatz 55 muß dabei jedoch die Steuerung 90 den Schalter 85 so ansteuern, daß er rechtzeitig vor der Wiedergabe der von der Lesevorrichtung der Abspieleinheit 50 ausgelesenen Daten des ersten Speichermediums 1 die Abspieleinheit 50 mit der Wiedergabeeinheit 80 verbindet, nachdem er zuvor den ersten Speicherplatz 55 mit der Wiedergabeeinheit 80 verbunden hatte, um die entsprechenden Daten während des Transports des ersten Speichermediums 1 vom Vorratsspeicher 25 in die Abspieleinheit 50 aus dem ersten Speicherplatz 55 auszulesen und an der Wiedergabeeinheit 80 wiederzugeben.

Auf diese Weise ist es möglich, übergangslos und ohne Unterbrechung den Abspielvorgang von Daten aus dem ersten Speicherplatz 55 auf das Abspielen des ersten Speichermediums 1 in der Abspieleinheit 50 umzuschalten, so daß der Hör- bzw. Sehgenuß des Benutzers nicht beeinträchtigt wird und schon vor dem Erreichen der Abspielposition durch das erste Speichermedium 1 in Gang gesetzt werden kann.

Es kann weiterhin vorgesehen sein, daß die auf einem der Speicherplätze 55, 60, 65 des Speichers 20 abgelegten Daten des zugehörigen Speichermediums 1, 5, 10 bei Entnahme dieses Speichermediums 1, 5, 10 aus dem Abspielgerät 15 oder aus dem Vorratsspeicher 25 gelöscht werden. Bei Wiedereinschub dieses Speichermediums 1, 5, 10 in das Abspielgerät 15 oder in den Vorratsspeicher 25 wird dann von der Steuerung 90 anhand der im Speicherbereich 70 gespeicherten Identifikationsdaten zur Identifizierung des wiedereingeschobenen Speichermediums 1, 5, 10 die ebenfalls im Speicherbereich 70 abgelegte zugehörige gespeicherte Startzeit und/oder Spieldauer ermittelt. Bei einer Einstellung des ersten Betriebsmodus wird dann anhand der Startzeit und/oder der Spieldauer der Speicherort mit den zugehörigen Daten auf diesem Speichermedium 1, 5, 10 ermittelt. Befindet sich dieses Speichermedium 1, 5, 10 in der Abspielposition der Abspieleinheit 50, so werden diese zugehörigen Daten ausgelesen und auf dem zugehörigen Speicherplatz 55, 60, 65 des Speichers 20 abgelegt. Somit reicht es aus, für jeden der Vorratsspeicherplätze 35, 40, 45 genau einen Speicherplatz 55, 60, 65 des Speichers 20 vorzusehen und dennoch mittels der im Speicherbereich 70 gespeicherten Startzeiten und/oder Spieldauern speicherplatzsparend die Identifikation von Datengruppen gerade nicht im Abspielgerät 15 bzw. im Vorratsspeicher 25 befindlicher Speichermedien zu speichern. Im Abspielgerät 15 können jedoch auch mehr Speicherplätze als Vorratsspeicherplätze vorgesehen sein, um auch Datengruppen von nicht im Abspielgerät 15 oder im Vorratsspeicher 25 abgelegten Speichermedien speichern zu können und somit nicht auf die Speicherung von Startzeiten und/oder Spieldauern für die Identifizierung solcher Datengruppen beim Wiedereinschub dieser Speichermedien angewiesen zu sein.

Zusätzlich oder alternativ kann vorgesehen sein, je nach Eingabe des Benutzers an der Tastatur 75, das entsprechende Speichermedium 1, 5, 10, im beschriebenen Ausführungsbeispiel gemäß Figur 1 das erste Speichermedium 1 im zweiten Betriebsmodus statt in die Abspielposition der Abspieleinheit 50 in eine Ausschubposition eines in Figur 1 nicht dargestellten Ein-/Ausgabeschachtes des Abspielgerätes 15 bzw. des Vorratsspeichers 25 zu transportieren. Während des Transportvorgangs des entsprechenden Speichermediums 1, 5, 10 in die Ausschubposition werden dann die auf dem zugehörigen Speicherplatz 55, 60, 65 abgelegten Datengruppen an der Wiedergabeeinheit 80 wiedergegeben, wozu der Schalter 85, veranlaßt durch die Steuerung 90, den entsprechenden Speicherplatz 55, 60, 65 mit der Wiedergabeeinheit 80 verbindet. Der Benutzer kann somit während des Transports des entsprechenden Speichermediums 1, 5, 10 in die Ausschubposition anhand der aus dem Speicher 20 wiedergegebenen Daten entscheiden, ob er das entsprechende Speichermedium 1, 5, 10 wirklich aus dem Abspielgerät 15 bzw. aus dem Vorratsspeicher 25 entfernen möchte. Am vorteilhaftesten ist dabei eine Automatik, bei der, veranlaßt durch Betätigung einer Ausschubtaste an der Tastatur 75, die Steuerung 90 nacheinander alle Speichermedien 1, 5, 10 vom Vorratsspeicher 25 jeweils einzeln in die Ausschubposition transportiert und diesen Vorgang solange, beispielsweise zyklisch, wiederholt, bis der Benutzer durch erneute Betätigung der Ausschubtaste an der Tastatur 75 bzw. einer weiteren Taste der Tastatur 75 das gerade in der Ausschubposition befindliche Speichermedium aus dem Abspielgerät 15 bzw. aus dem Vorratsspeicher 25 entnimmt. Dabei wird beispielsweise ein Speichermedium, das nach Wiedergabe aller im zugehörigen Speicherplatz gespeicherten Datengruppen nicht aus der Ausschubposition entfernt wurde, wieder in den Vorratsspeicher 25 zurücktransportiert und währenddessen werden dann bereits die Datengruppen für das nächste in die Ausschubposition zu transportierende Speichermedium aus dem zugehörigen Speicherplatz ausgelesen und an der Wiedergabeeinheit 80 wiedergegeben. Für den Benutzer entstehen somit keine störenden, durch den Rücktransport von der Ausschubposition in den Vorratsspeicher 25 bewirkten Pausen bei der Wiedergabe, so daß er bereits durch die Wiedergabe der Daten des als nächstes in die Ausschubposition zu transportierenden Speichermediums über dessen Ausschub entscheiden kann. Ein Auswahlvorgang für den Ausschub eines nicht mehr benötigten Speichermediums aus dem Abspielgerät 15 bzw. aus dem Vorratsspeicher 25 wird somit für den Benutzer beschleunigt, so daß der Bedienkomfort erhöht wird.

Voraussetzung für eine ununterbrochene Wiedergabe aus dem Speicher 20 ist jedoch, daß die Anzahl der in dem ersten Betriebsmodus im Speicher 20 abgelegten Datengruppen für jeden Speicherplatz 55, 60, 65 so gewählt wird, daß spätestens nach einmaligem Abspielen aller auf dem jeweiligen Speicherplatz 55, 60, 65 im Speicher 20 abgelegten Datengruppen des entsprechenden Speichermediums 1, 5, 10 dieses im zweiten Betriebsmodus ausgewählte Speichermedium 1, 5, 10 vom entsprechenden Vorratsspeicherplatz 35, 40, 45 in die Ausschubposition gebracht wurde. Die Anzahl der in dem ersten Betriebsmodus im jeweiligen Speicherplatz 55, 60, 65 abgelegten Datengruppen sollte dabei vorteilhafterweise so gewählt werden, daß auch für den Rücktransport eines nicht für den Ausschub akzeptierten Speichermediums genügend Datengruppen für das nächste in die Ausschubposition zu transportierende Speichermedium auf dem entsprechenden Speicherplatz vorhanden sind, um eine Abspielpause während dieses Rücktransports und ein ausschließliches Abspielen von Datengruppen während des Transports des nächsten Speichermediums in die Abspielposition zu vermeiden. Bei mangelndem Speicherplatz im Speicher 20 kann es jedoch dennoch vorgesehen sein, während des Rücktransports eines nicht für den Ausschub akzeptierten Speichermediums von der Ausschubposition in den Vorratsspeicher 25 keine Datengruppen aus dem Speicher 20 an der Wiedergabeeinheit 80 wiederzugeben. Vorteilhafterweise wird jedoch sowohl die Zeitspanne des Rücktransportes eines nicht zum Ausschub akzeptierten Speichermediums von der Ausschubposition in den Vorratsspeicher 25 als auch die für den Transport des nächsten Speichermediums vom Vorratsspeicher 25 in die Ausschubposition benötigte Zeitspanne durch Abspielen von Datengruppen dieses als nächstes in die Ausschubposition zu bringenden Speichermediums aus dem zugehörigen Speicherplatz des Speichers 20 überbrückt und somit die Auswahl des nicht mehr im Abspielgerät 15 bzw. im Vorratsspeicher 25 benötigten Speichermediums für den Benutzer vereinfacht und beschleunigt.

Das erfindungsgemäße Verfahren wird nun anhand von Figur 2 mittels eines Ablaufplanes für die Steuerung 90 beispielhaft dargestellt. Bei einem Programmpunkt 100 prüft die Steuerung 90, ob an der Tastatur 75 der erste Betriebsmodus eingestellt wurde. Ist dies der Fall, so wird zu einem Programmpunkt 105 verzweigt, andernfalls wird zu einem Programmpunkt 140 verzweigt. Bei Programmpunkt 105 prüft die Steuerung 90, ob eine automatische Selektion von Datengruppen eines oder mehrerer im Vorratsspeicher 25 abgelegter Speichermedien 1, 5, 10 erfolgen soll, d. h. ob der Benutzer an der Tastatur 75 kein Speichermedium für eine manuelle Selektion von Datengruppen ausgewählt hat. Ist dies der Fall, so wird zu einem Programmpunkt 110 verzweigt, andernfalls wird zu einem Programmpunkt 135 verzweigt. Bei Programmpunkt 110 veranlaßt die auch mit dem Vorratsspeicher 25 verbundene Steuerung 90 den Transport eines der Speichermedien 1, 5, 10 in die Abspielposition in der Abspieleinheit 50 und ermittelt aus den im Speicherbereich 70 abgelegten Daten, welche der Datengruppen dieses Speichermediums mit der höchsten Häufigkeit zuvor von der Abspieleinheit 50 abgespielt und an der Wiedergabeeinheit 80 wiedergegeben wurde. Anschließend wird zu einem Programmpunkt 115 verzweigt. Bei Programmpunkt 115 prüft die Steuerung 90, ob mehrere Datengruppen von verschiedenen Speicherabschnitten des in die Abspielposition geladenen Speichermediums mit gleicher Häufigkeit vorliegen. Ist dies der Fall, so wird zu einem Programmpunkt 120 verzweigt, andernfalls wird zu einem Programmpunkt 130 verzweigt. Bei Programmpunkt 120 veranlaßt die Steuerung 90 die Speicherung mindestens einer Datengruppe am Beginn des ersten Speicherabschnitts des in der Abspielposition befindlichen Speichermediums, beispielsweise am Anfang des ersten Musiktitels auf einer Kompakt-Disc. Die Speicherung erfolgt dabei auf einem dem Vorratsspeicherplatz des in der Abspielposition befindlichen Speichermediums zugeordneten Speicherplatz des Speichers 20. Anschließend wird zu einem Programmpunkt 125 verzweigt. Bei Programmpunkt 125 veranlaßt die Steuerung 90 die Speicherung der Startzeit und/oder der Spieldauer der im Speicher 20 zuvor abgespeicherten Datengruppen. Die Startzeit und/oder die Spieldauer werden dabei im Speicherbereich 70 abgelegt und Identifikationsdaten, wie beispielsweise der Gesamtspielzeit und Anzahl der Speicherabschnitte für das in der Abspielposition befindliche Speichermedium zugeordnet. Anschließend wird zu einem Programmpunkt 230 verzweigt. Bei Programmpunkt 230 prüft die Steuerung 90, ob für alle im Vorratsspeicher 25 oder in der Abspieleinheit 50 abgelegten Speichermedien Datengruppen in den zugeordneten Speicherplätzen des Speichers 20 abgelegt wurden. Ist dies der Fall, so wird das Programm verlassen, andernfalls wird zu Programmpunkt 110 zurückverzweigt, wobei das in der Abspielposition befindliche Speichermedium in den Vorratsspeicher 25 zurücktransportiert und ein neues Speichermedium aus dem Vorratsspeicher 25 in die Abspielposition transportiert wird.

Bei Programmpunkt 130 veranlaßt die Steuerung 90 die Speicherung mindestens einer zuvor am häufigsten wiedergegebenen Datengruppe des in der Abspielposition befindlichen Speichermediums auf dem zugehörigen Speicherplatz oder die Speicherung mindestens einer Datengruppe am Beginn des Speicherabschnitts mit der größten Wiedergabehäufigkeit des in der Abspielposition befindlichen Speichermediums, beispielsweise am Anfang des am häufigsten zuvor wiedergegebenen Musiktitels einer Kompakt-Disc.

Bei Programmpunkt 135 veranlaßt die Steuerung 90 die Speicherung mindestens einer manuell vom Benutzer an der Tastatur 75 vorgegebenen Datengruppe des in der Abspielposition befindlichen Speichermediums auf dem zugehörigen Speicherplatz oder die Speicherung mindestens einer Datengruppe am Beginn eines vom Benutzer mittels der Tastatur 75 ausgewählten Speicherabschnitts des in der Abspielposition befindlichen Speichermediums auf dem zugehörigen Speicherplatz.

Bei Programmpunkt 140 prüft die Steuerung 90, ob der Benutzer an der Tastatur 75 den zweiten Betriebsmodus eingestellt hat. Ist dies der Fall, so wird zu einem Programmpunkt 145 verzweigt, andernfalls wird zu einem Programmpunkt 185 verzweigt. Bei Programmpunkt 145 wählt die Steuerung 90 automatisch oder durch entsprechende Eingabe an der Tastatur 75 durch den Benutzer eines der Speichermedien 1, 5, 10 im Vorratsspeicher 25 aus. Anschließend wird zu einem Programmpunkt 150 verzweigt. Bei Programmpunkt 150 veranlaßt die Steuerung 90 den Schalter 85 zur Verbindung des dem ausgewählten Speichermedium zugeordneten Speicherplatzes des Speichers 20 mit der Wiedergabeeinheit 80. Weiterhin veranlaßt die Steuerung 90 den Zugriff auf die in diesem Speicherplatz gespeicherte mindestens eine Datengruppe, sofern eine solche dort gespeichert ist, und deren Wiedergabe an der Wiedergabeeinheit 80. Anschließend wird zu einem Programmpunkt 235 verzweigt. Bei Programmpunkt 235 prüft die Steuerung 90, ob der Benutzer an der Tastatur 75 eine Ausschubanforderung eingegeben hat. Ist dies der Fall, so wird zu einem Programmpunkt 240 verzweigt, andernfalls wird zu einem Programmpunkt 155 verzweigt. Bei Programmpunkt 240 veranlaßt die Steuerung 90 den Schalter 85 zur Verbindung eines Speicherplatzes des Speichers 20, der entweder einem von der Steuerung 90 automatisch ausgewählten oder einem vom Benutzer an der Tastatur 75 ausgewählten Speichermedium im Vorratsspeicher 25 zugeordnet ist, mit der Wiedergabeeinheit 80. Weiterhin veranlaßt die Steuerung 90 die Wiedergabe der auf diesem Speicherplatz gespeicherten Daten an der Wiedergabeeinheit 80. Außerdem veranlaßt die Steuerung 90 bei Programmpunkt 240 den Transport des ausgewählten Speichermediums in die Ausschubposition. Anschließend wird zu einem Programmpunkt 245 verzweigt. Bei Programmpunkt 245 prüft die Steuerung 90, ob innerhalb einer beispielsweise in Abhängigkeit der Datenmenge im auszulesenden Speicherplatz vorgegebenen Zeit an der Tastatur 75 vom Benutzer ein Befehl zum Ausschub des ausgewählten Speichermediums eingegeben wurde. Ist dies der Fall, so wird zu Programmpunkt 185 verzweigt und der Benutzer kann das Speichermedium aus der Ausschubposition entnehmen, andernfalls wird zu einem Programmpunkt 250 verzweigt. Bei Programmpunkt 250 werden die im zugehörigen Speicherplatz gespeicherten Daten weiterhin ausgelesen und das Speichermedium von der Ausschubposition in den Vorratsspeicher 25 zurücktransportiert. Anschließend wird zu einem Programmpunkt 255 verzweigt. Die Anzahl der im zugehörigen Speicherplatz des Speichers 20 abgelegten Datengruppen sollte dabei nicht nur in Abhängigkeit der für den Transport und gegebenenfalls den Rücktransport eines Speichermediums zwischen dem Vorratsspeicher und der Ausschubposition gewählt werden, sondern auch die für den Benutzer vorgegebene Zeit berücksichtigen, innerhalb der er eine Entscheidung über den Ausschub auch noch nach Erreichen der Ausschubposition des ausgewählten Speichermediums treffen kann, so daß die im entsprechenden Speicherplatz abgelegten Datengruppen eines Speichermediums nur jeweils einmal an der Wiedergabeeinheit 80 wiedergegeben werden. Es kann jedoch auch vorgesehen sein, den zugehörigen Speicherplatz zyklisch auszulesen, so daß unter Inkaufnahme von Wiedergabewiederholungen an der Wiedergabeeinheit 80 Speicherplatz im Speicher 20 eingespart werden kann. Anschließend wird zu einem Programmpunkt 255 verzweigt. Bei Programmpunkt 255 prüft die Steuerung 90, ob alle Speichermedien dem Benutzer für eine Ausschubentscheidung in der Ausschubposition angeboten wurden. Ist dies der Fall, so wird das Programm verlassen, andernfalls wird zu Programmpunkt 240 zurückverzweigt und ein neues Speichermedium in die Ausschubposition transportiert. Gegebenenfalls kann vorgesehen sein, dem Benutzer die Speichermedien zyklisch wiederholt in der Ausschubposition zum Ausschub anzubieten, solange, bis der Benutzer durch Eingabe an der Tastatur 75 den Vorgang zur Selektion eines Speichermediums für den Ausschub aus dem Abspielgerät 15 bzw. dem Vorratsspeicher 25 abbricht.

Bei Programmpunkt 155 veranlaßt die Steuerung 90 den Schalter 85 zur Verbindung des dem ausgewählten Speichermedium zugeordneten Speicherplatzes mit der Wiedergabeeinheit 80 und die Wiedergabeeinheit 80 zur Wiedergabe der auf diesem Speicherplatz gespeicherten Daten Weiterhin veranlaßt die Steuerung 90 den Transport des ausgewählten Speichermediums vom Vorratsspeicher 25 in die Abspielposition. Anschließend wird zu einem Programmpunkt 160 verzweigt. Bei Programmpunkt 160 prüft die Steuerung 90, ob das ausgewählte Speichermedium die Abspielposition erreicht hat. Ist dies der Fall, so wird zu einem Programmpunkt 165 verzweigt, andernfalls wird zu einem Programmpunkt 180 verzweigt. Bei Programmpunkt 180 durchläuft die Steuerung 90 eine Warteschleife. Anschließend wird zu Programmpunkt 160 zurückverzweigt. Bei Programmpunkt 165 ermittelt die Steuerung 90 den Speicherort auf dem in der Abspielposition befindlichen Speichermedium, der demjenigen Speicherort unmittelbar folgt, dessen Daten vor Erreichen der Abspielposition durch das Speichermedium zuletzt aus dem zugeordneten Speicherplatz ausgelesen und an der Wiedergabeeinheit 80 wiedergegeben wurden. Die Steuerung 90 veranlaßt daraufhin die Fokussierung der Lesevorrichtung der Abspieleinheit 50 auf diesen ermittelten Speicherort. Anschließend wird zu einem Programmpunkt 170 verzweigt. Bei Programmpunkt 170 veranlaßt die Steuerung 90 den Schalter 85 zur Verbindung der Abspieleinheit 50 mit der Wiedergabeeinheit 80. Anschließend wird zu einem Programmpunkt 175 verzweigt. Beim Programmpunkt 175 veranlaßt die Steuerung 90 das Auslesen von Daten des in der Abspielposition befindlichen Speichermediums beginnend vom ermittelten Speicherort an und deren Wiedergabe an der Wiedergabeeinheit 80. Anschließend wird das Programm verlassen.

Bei Programmpunkt 185 prüft die Steuerung 90, ob ein in der Ausschubposition vorliegendes Speichermedium vom Benutzer entnommen wurden. Ist dies der Fall, so wird zu einem Programmpunkt 190 verzweigt, andernfalls wird zu einem Programmpunkt 195 verzweigt. Bei Programmpunkt 190 veranlaßt die Steuerung 90 das Löschen der Daten in demjenigen Speicherplatz des Speichers 20, der dem aus der Ausschubposition vom Benutzer entnommenen Speichermedium zugeordnet war. Anschließend wird das Programm.verlassen. Bei Programmpunkt 195 prüft die Steuerung 90, ob ein Speichermedium in den Ein-/Ausgabeschacht des Abspielgerätes 15 bzw. des Vorratsspeichers 25 eingeschoben wurde. Ist dies der Fall, so wird zu einem Programmpunkt 200 verzweigt, andernfalls wird das Programm verlassen. Bei Programmpunkt 200 veranlaßt die Steuerung 90 eine Identifikation des eingeschobenen neuen Speichermediums anhand der im Speicherbereich 70 gespeicherten Identifikationsdaten, der Gesamtspielzeit und der Anzahl insbesondere der Speicherabschnitte dieses Speichermediums, beispielsweise der Gesamtspielzeit und der Anzahl von Musiktiteln auf einer Kompakt-Disc. Anschließend wird zu einem Programmpunkt 205 verzweigt. Bei Programmpunkt 205 prüft die Steuerung 90 anhand eines Vergleichs der von dem neu eingeschobenen Speichermedium ermittelten Identifikationsdaten mit den im Speicherbereich 70 abgelegten Identifikationsdaten, die ebenfalls die Gesamtspielzeit und die Anzahl der Speicherabschnitte von zuvor im Abspielgerät 15 bzw. im Vorratsspeicher 25 abgelegten Speichermedien umfassen können. Stellt die Steuerung 90 bei Programmpunkt 205 eine Übereinstimmung der Identifikationsdaten des neu eingeschobenen Speichermediums mit bereits im Speicherbereich 70 abgelegten Identifikationssdaten fest, so wird zu einem Programmpunkt 210 verzweigt, andernfalls wird zu Programmpunkt 100 zurückverzweigt. Bei Programmpunkt 210 prüft die Steuerung 90, ob sich das Abspielgerät 15 in einer Betriebspause befindet. Ist dies der Fall, so wird zu einem Programmpunkt 215 verzweigt, andernfalls wird zu einem Programmpunkt 225 verzweigt. Bei Programmpunkt 225 durchläuft die Steuerung 90 eine Warteschleife. Anschließend wird zu Programmpunkt 210 zurückverzweigt. Bei Programmpunkt 215 veranlaßt die Steuerung 90 den Transport des neu eingeschobenen Speichermediums in die Abspielposition. Anschließend wird zu einem Programmpunkt 220 verzweigt. Bei Programmpunkt 220 veranlaßt die Steuerung 90 die Ermittlung mindestens einer Datengruppe auf dem in der Abspielposition befindlichen Speichermedium in Zuordnung zu den zu diesem Speichermedium im Speicherbereichen 70 abgespeicherten Informationen über die Startzeit und/oder die Spieldauer der bereits zu einem früheren Zeitpunkt vorgegebenen oder ausgewählten Datengruppen des in der Abspielposition befindlichen Speichermediums. Die mindestens eine Datengruppe wird dann, durch die Steuerung 90 veranlaßt, auf einem Speicherplatz des Speichers 20 abgelegt, der dem für das in der Abspielposition befindliche Speichermedium reservierten Vorratsspeicherplatz zugeordnet ist. Anschließend wird das Programm verlassen.

Das erfindungsgemäße Verfahren eignet sich besonders für die Speicherung charakteristischer digitaler Audiodaten von in einem als Kompakt-Disc-Wechsler ausgebildeten Abspielgerät 15 befindlichen als Kompakt-Discs ausgebildeten Speichermedien besonders im Falle des Kompakt-Disc-Ausschubs bei magazinlosen Wechslern, das bedeutet, bei Abspielgeräten 15, bei denen der Vorratsspeicher 25 gemäß Figur 1 in das Abspielgerät 15 integriert ist, und bei dem nur ein einziger Ein-/Ausgabeschacht für das Abspielgerät 15 vorgesehen ist. Bei diesem Kompakt-Disc-Wechsler ist es für die Entnahme einer Kompakt-Disc nicht möglich, alle Kompakt-Discs des Vorratsspeichers 25 auf einmal auszuschieben. Die Kompakt-Discs können dabei nur einzeln über den Ein-/Ausgabeschacht des Abspielgerätes 15 zum Ausschub freigegeben werden.

## Patentansprüche

1. Verfahren zur Wiedergabe von auf einem Speichermedium (1, 5, 10) gespeicherten Daten in einem Abspielgerät (15), **dadurch gekennzeichnet, daß** in einem ersten Betriebsmodus Daten vom Speichermedium während eines Abspiel- und Wiedergabevorgangs des Speichermediums (1, 5, 10) in einem Speicher (20) abgelegt werden, daß in einem zweiten Betriebsmodus das Speichermedium (1, 5, 10) augewählt wird und daß innerhalb eines Zeitraums, in dem das ausgewählte Speichermedium (1, 5, 10) von einem Vorratsspeicher (25) in eine Abspielposition, in der die auf dem Speichermedium (1, 5, 10) gespeicherten Daten von einer Lesevorrichtung auslesbar sind, oder in eine Ausschubposition, von der das ausgewählte Speichermedium (1, 5, 10) aus dem Abspielgerät (15) oder dem Vorratsspeicher (25) entnehmbar ist, gebracht wird, zumindest ein Teil der enteprechenden, im Speicher (20) abgelegten Daten abgespielt und wiedergegeben wird.

2. Verfahren nach Anspruch 1, **dadurch gekennzeichnet, daß** in dem ersten Betriebsmodus während des Abspielens des Speichermediums (1, 5, 10) mindestens eine Datengruppe ausgewählt wird und daß die mindestens eine Datengruppe im Speicher (20) abgelegt wird.

3. Verfahren nach Anspruch 2, **dadurch gekennzeichnet, daß** die mindestens eine Datengruppe mittels einer Bedieneinheit (30) an einem beliebigen Speicherort auf dem Speichermedium (1, 5, 10) ausgewählt wird.

4. Verfahren nach Anspruch 2 oder 3, **dadurch gekennzeichnet, daß** die mindestens eine Datengruppe an einem vorgegebenen Speicherort auf dem Speichermedium (1, 5, 10) ausgewählt wird.

5. Verfahren nach Anspruch 4, **dadurch gekennzeichnet, daß** der Speicherort in Abhängigkeit der Häufigkeit der Wiedergabe von zuvor abgespielten Datengruppen des Speichermediums (1, 5, 10) vorgegeben wird, so daß die mindestens eine Datengruppe des vorgegebenen Speicherortes die größte Wiedergabehäufigkeit aufweist oder zu einem Speicherabschnitt des Speichermediums (1, 5, 10) mit der größten Wiedergabehäufigkeit gehört.

6. Verfahren nach einem der vorherigen Ansprüche, **dadurch gekennzeichnet, daß** die Anzahl der in dem ersten Betriebsmodus im Speicher (20) abgelegten Datengruppen so gewählt wird, daß spätestens nach einmaligem Abspielen aller im Speicher (20) abgelegten Datengruppen des Speichermediums (1, 5, 10) dieses im zweiten Betriebsmodus ausgewählte Speichermedium (1, 5, 10) vom Vorratsspeicher (25) in die Abspielposition oder in die Ausschubposition gebracht wurde.

7. Verfahren nach einem der vorherigen Ansprüche, **dadurch gekennzeichnet, daß** die Daten komprimiert und/oder mit reduzierter Abtastrate und/oder mit reduzierter Datenbreite im Speicher (20) abgelegt werden.

8. Verfahren nach einem der vorherigen Ansprüche, **dadurch gekennzeichnet, daß** im ersten Betriebsmodus eine Startzeit und/oder eine Spieldauer für die im Speicher (20) abzulegenden Daten in Abhängigkeit ihres Speicherortes auf dem Speichermedium (1, 5, 10) ermittelt werden und daß die Startzeit und/oder die Spieldauer in Zuordnung zu Identifikationsdaten des Speichermediums (1, 5, 10) gespeichert werden.

9. Verfahren nach Anspruch 8, **dadurch gekennzeichnet, daß** die im Speicher (20) abgelegten Daten des Speichermediums (1, 5, 10) bei Entnahme des speichermediums (1, 5, 10) aus dem Abspielgerät (15) und/oder aus dem Vorratsspeicher (25) gelöscht werden, daß bei Wiedereinschub des Speichermediums (1, 5, 10) in das Abspielgerät (15) und/oder in den Vorratsspeicher (25) anhand der gespeicherten Identifikationsdaten die zugehörige gespeicherte Startzeit und/oder Spieldauer ermittelt werden, daß bei Einstellung des ersten Betriebsmodus anhand der Startzeit und/oder der Spieldauer der Speicherort mit den zugehörigen Daten auf dem Speichermedium (1, 5, 10) ermittelt wird und daß die zugehörigen Daten ausgelesen und in dem Speicher (20) abgelegt werden.

10. Verfahren nach einem der vorherigen Ansprüche, **dadurch gekennzeichnet, daß** das Speichermedium (1, 5, 10) im zweiten Betriebsmodus nach Erreichen der Abspielposition beginnend an einem Speicherort ausgelesen und wiedergegeben wird, der demjenigen Speicherort unmittelbar folgt, dessen Daten vor Erreichen der Abspielposition durch das Speichermedium (1, 5, 10) in zuletzt aus dem Speicher (20) ausgelesen und wiedergegeben wurden.

11. Verfahren zur Wiedergabe von auf einem Speichermedium (1, 5, 10) gespeicherten Daten in einem Abspielgerät (15), **dadurch gekennzeichnet, daß** in einem ersten Betriebsmodus Daten vom Speichermedium während eines Abspielvorgangs des Speichermediums (1, 5, 10) in einem Speicher (20) abgelegt werden, daß in einem zweiten Betriebsmodus das Speichermedium (1, 5, 10) ausgewählt wird und daß innerhalb eines Zeitraums, in dem das ausgewählte Speichermedium (1, 5, 10) von einem Vorratsspeicher (25) in eine Ausschubposition, von der das ausgewählte Speichermedium (1, 5, 10) aus dem Abspielgerät (15) oder dem Vorratsspeicher (25) entnehmbar ist, gebracht wird, zumindest ein Teil de entsprechenden im Speicher (20) abgelegten Daten abgespielt und wiedergegeben wird.

## Claims

1. Method for reproducing data stored on a storage medium (1, 5, 10) in a playback unit (15), **characterized in that** in a first mode of operation data from the storage medium are stored in a memory (20) during a playback and reproduction operation on the storage medium (1, 5, 10), **in that** in a second mode of operation the storage medium (1, 5, 10) is selected, and **in that** within a period in which the selected storage medium (1, 5, 10) is fetched from a magazine store (25) to a playback position, in which the data stored on the storage medium (1, 5, 10) can be read by a reading apparatus, or to an ejection position, from which the selected storage medium (1, 5, 10) can be removed from the playback unit (15) or from the magazine store (25), at least some of the corresponding data stored in the memory (20) are played back and reproduced.

2. Method according to Claim 1, **characterized in that** in the first mode of operation at least one data group is selected during playback of the storage medium (1, 5, 10), and **in that** the at least one data group is stored in the memory (20).

3. Method according to Claim 2, **characterized in that** the at least one data group is selected at a particular storage location on the storage medium (1, 5, 10) using a control unit (30).

4. Method according to Claim 2 or 3, **characterized in that** the at least one data group is selected at a prescribed storage location on the storage medium (1, 5, 10).

5. Method according to Claim 4, **characterized in that** the storage location is prescribed on the basis of the frequency of reproduction of previously played back data groups on the storage medium (1, 5, 10), which means that the at least one data group at the prescribed storage location has the highest frequency of reproduction or is part of a memory portion of the storage medium (1, 5, 10) having the highest frequency of reproduction.

6. Method according to one of the preceding claims, **characterized in that** the number of data groups stored in the memory (20) in the first mode of operation is chosen such that the end of single playback of all of the data groups on the storage medium (1, 5, 10) which are stored in the memory (20) is the latest point at which this storage medium (1, 5, 10) selected in the second mode of operation has been fetched from the magazine store (25) to the playback position or to the ejection position.

7. Method according to one of the preceding claims, **characterized in that** the data are stored in the memory (20) in compressed form and/or at a reduced sampling rate and/or with a reduced data length.

8. Method according to one of the preceding claims, **characterized in that** in the first mode of operation a starting time and/or a playing time for the data to be stored in the memory (20) are ascertained on the basis of said data's storage location on the storage medium (1, 5, 10), and **in that** the starting time and/or the playing time are stored in association with identification data for the storage medium (1, 5, 10).

9. Method according to Claim 8, **characterized in that** the data on the storage medium (1, 5, 10) which are stored in the memory (20) are erased when the storage medium (1, 5, 10) is removed from the playback unit (15) and/or from the magazine store (25), **in that** reinsertion of the storage medium (1, 5, 10) into the playback unit (15) and/or into the magazine store (25) prompts the associated stored starting time and/or playing time to be ascertained using the stored identification data, **in that** setting the first mode of operation prompts the storage location with the associated data on the storage medium (1, 5, 10) to be ascertained using the starting time and/or the playing time, and **in that** the associated data are read and are stored in the memory (20).

10. Method according to one of the preceding claims, **characterized in that** the storage medium (1, 5, 10) is read and reproduced in the second mode of operation after the playback position has been reached, starting at a storage location which comes directly after that storage location whose data have been read and reproduced last from the memory (20) before the playback position has been reached by the storage medium (1, 5, 10).

11. Method for reproducing data stored on a storage medium (1, 5, 10) in a playback unit (15), **characterized in that** in a first mode of operation data from the storage medium are stored in a memory (20) during a playback operation on the storage medium (1, 5, 10), **in that** in a second mode of operation the storage medium (1, 5, 10) is selected, and **in that** within a period in which the selected storage medium (1, 5, 10) is fetched from a magazine store (25) to an ejection position, from which the selected storage medium (1, 5, 10) can be removed from the playback unit (15) or from the magazine store (25), at least some of the corresponding data stored in the memory (20) are played back and reproduced.

## Revendications

1. Procédé de restitution de données stockées sur un support de stockage (1. 5, 10) présent dans un lecteur (15),
**caractérisé en ce que**
dans un premier mode de fonctionnement, des données provenant du support de stockage sont placées, pendant un processus de lecture et de restitution du support de stockage (1, 5, 10), dans une mémoire (20), dans un deuxième mode de fonctionnement, le support de stockage (1, 5, 10) est sélectionné et, au sein d'une période de temps, pendant laquelle le support de stockage (1, 5, 10) sélectionné est amené par une mémoire de réserve (25) dans une position de lecture, dans laquelle les données stockées sur le support de stockage (1, 5, 10) peuvent être lues par un dispositif de lecture, ou dans une position d'éjection, à partir de laquelle le support de stockage (1, 5, 10) sélectionné peut être retiré du lecteur (15) ou de la mémoire de réserve (25), au moins une partie des données correspondantes placées dans la mémoire (20) est lue et restituée.

2. Procédé selon la revendication 1,
**caractérisé en ce que**
dans le premier mode de fonctionnement, pendant la lecture du support de stockage (1, 5, 10), au moins un groupe de données est sélectionné et l'au moins un groupe de données est placé dans la mémoire (20).

3. Procédé selon la revendication 2,
**caractérisé en ce que**
l'au moins un groupe de données est sélectionné au moyen d'une unité de commande (30) en un lieu de stockage quelconque sur le support de stockage (1, 5, 10).

4. Procédé selon la revendication 2 ou 3,
**caractérisé en ce que**
l'au moins un groupe de données est sélectionné en un lieu de stockage prédéterminé sur le support de stockage (1, 5, 10).

5. Procédé selon la revendication 4,
**caractérisé en ce que**
le lieu de stockage est prédéterminé en fonction de la fréquence de la restitution de groupes de données préalablement lus sur le support de stockage (1, 5, 10), de telle sorte que l'au moins un groupe de données du lieu de stockage prédéterminé présente la plus haute fréquence de restitution ou que l'on choisit une section de stockage du support de stockage (1, 5, 10) ayant la plus haute fréquence de restitution.

6. Procédé selon l'une des revendications précédentes,
**caractérisé en ce que**
le nombre des groupes de données placés, dans le premier mode de fonctionnement, dans la mémoire (20) est sélectionné de telle sorte qu'au plus tard après une unique lecture de tous les groupes de données du support de stockage (1, 5, 10) placés dans la mémoire (20), ce support de stockage (1, 5, 10) sélectionné dans le deuxième mode de fonctionnement a été amené par la mémoire de réserve (25) dans la position de lecture ou dans la position d'éjection.

7. Procédé selon l'une des revendications précédentes,
**caractérisé en ce que**
les données sont placées dans la mémoire (20) de façon comprimée et/ou avec un débit de balayage réduit et/ou avec une largeur de données réduite.

8. Procédé selon l'une des revendications précédentes,
**caractérisé en ce que**
dans le premier mode de fonctionnement, un moment de début et/ou une durée de lecture pour les données devant être placées dans la mémoire (20) sont déterminés en fonction de leur lieu de stockage sur le support de stockage (1, 5, 10), et le moment de début et/ou la durée de lecture sont stockés en association avec des données d'identification du support de stockage (1, 5, 10).

9. Procédé selon la revendication 8,
**caractérisé en ce que**
les données du support de stockage (1, 5, 10) placées dans la mémoire (20) sont effacées lors du retrait du support de stockage (1, 5, 10) hors du lecteur (15) et/ou hors de la mémoire de réserve (25), lors d'une réinsertion du support de stockage (1, 5, 10) dans le lecteur (15) et/ou dans la mémoire de réserve (25), le moment de début et/ou la durée de lecture stockés associés sont déterminés à l'aide des données d'identification stockées, lors du réglage du premier mode de fonctionnement, le lieu de stockage comportant les données associées sur le support de stockage (1, 5, 10) est déterminé à l'aide du moment de début et/ou de la durée de lecture et, les données associées sont lues et placées dans la mémoire (20).

10. Procédé selon l'une des revendications précédentes,
**caractérisé en ce que**
le support de stockage (1, 5, 10), dans le deuxième mode de fonctionnement, après avoir atteint la position de lecture, est lu et restitué à partir du début d'un lieu de stockage, qui suit immédiatement le lieu de stockage dont les données, avant que le support de stockage (1, 5, 10) n'atteigne la position de lecture, ont été tout d'abord lues et restituées à partir de la mémoire (20).

11. Procédé de restitution de données stockées sur un support de stockage (1, 5, 10) présent dans un lecteur (15),
**caractérisé en ce que**
dans un premier mode de fonctionnement, des données provenant du support de stockage sont placées, pendant un processus de lecture du support de stockage (1, 5, 10), dans une mémoire (20), dans un deuxième mode de fonctionnement, le support de stockage (1, 5, 10) est sélectionné et au cours d'une période de temps pendant laquelle le support de stockage (1, 5, 10) sélectionné est amené par une mémoire de réserve (25) dans une position d'éjection, à partir de laquelle le support de stockage (1, 5, 10) sélectionné peut être retiré du lecteur (15) ou de la mémoire de réserve (25), au moins une partie des données correspondantes placées dans la mémoire (20) est lue et restituée.
